# EUROPEAN PATENT APPLICATION

(11) **EP 4 503 732 A1**
(43) Date of publication of application: **05.02.2025**
(21) Application number: 22934281.1
(22) Date of filing: 31.03.2022
(51) Int. Cl.: H04W 36/00

(54) **ASSISTANCE INFORMATION SENDING METHOD AND APPARATUS, ASSISTANCE INFORMATION RECEIVING METHOD AND APPARATUS, AND COMMUNICATION APPARATUS AND STORAGE MEDIUM**

(71) Applicant: Beijing Xiaomi Mobile Software Co., Ltd., Beijing 100085 (CN)
(72) Inventor: WU, Yumin, Beijing 100085 (CN)
(74) Representative: Stöckeler, Ferdinand
(86) International application number: PCT/CN2022/084671
(87) International publication number: WO 2023/184444

(57) **Abstract**

The present disclosure relates to an assistance information sending method and apparatus, an assistance information receiving method and apparatus, and a communication apparatus and a storage medium. The assistance information sending method comprises: determining a requirement for using discontinuous reception (DRX); determining DRX assistance information corresponding to the requirement, wherein the DRX assistance information is at least used for indicating DRX configuration information desired by a terminal; and sending the DRX assistance information to a network device. According to the present disclosure, a terminal can determine, according to a requirement for using DRX, DRX configuration information desired by the terminal under the requirement, and then carry the desired DRX configuration information in DRX assistance information and send the same to a network device, such that the network device can learn of the DRX configuration information desired by the terminal. Therefore, when the network device configures the terminal according to the DRX configuration information desired by the terminal, it can be ensured that different requirements of the terminal are met.

## Description

### TECHNICAL FIELD

The disclosure relates to the field of communication technology, in particular to a method for sending assistance information, a method for receiving assistance information, an apparatus for sending assistance information, an apparatus for receiving assistance information, a communication device, and a computer-readable storage medium.

### BACKGROUND

In order to save energy, during a communication process, a terminal communicates with a base station by means of discontinuous reception (DRX), and reports its preferred DRX configuration information to the base station, so that the base station can configure the terminal correspondingly.

However, currently, the terminal reports its preferred DRX configuration information to the base station only for the purpose of energy saving of the terminal, which is not well applicable to other requirements of the terminal.

### SUMMARY

In view of this, embodiments of the disclosure provide a method for sending assistance information, a method for receiving assistance information, an apparatus for sending assistance information, an apparatus for receiving assistance information, a communication device, and a computer-readable storage medium, to solve the technical problems in the related art.

According to a first aspect of embodiments of the disclosure, a method for sending assistance information is provided, applicable to a terminal. The method includes: determining a requirement of using discontinuous reception (DRX); determining DRX assistance information corresponding to the requirement, in which the DRX assistance information at least indicates preferred DRX configuration information of the terminal; and sending the DRX assistance information to a network device.

According to a second aspect of embodiments of the disclosure, a method for receiving assistance information is provided, applicable to a network device. The method includes: receiving DRX assistance information determined by a terminal according to a requirement of using DRX.

According to a third aspect of embodiments of the disclosure, an apparatus for sending assistance information is provided, arranged in a terminal. The apparatus includes: a processing module, configured to determine a requirement of using DRX, and determine DRX assistance information corresponding to the requirement, in which the DRX assistance information at least indicates preferred DRX configuration information of the terminal; and a communication module, configured to send the DRX assistance information to a network device.

According to a fourth aspect of embodiments of the disclosure, an apparatus for receiving assistance information is provided, arranged in a network device. The apparatus includes: a communication module, configured to receive DRX assistance information determined by a terminal according to a requirement of using DRX.

According to a fifth aspect of embodiments of the disclosure, a communication device including a processor and a memory for storing a computer program is provided. When the computer program is executed by the processor, the method for sending assistance information of any of the above embodiments is implemented.

According to a sixth aspect of embodiments of the disclosure, a communication device including a processor and a memory for storing a computer program is provided. When the computer program is executed by the processor, the method for receiving assistance information of any of the above embodiments is implemented.

According to a seventh aspect of embodiments of the disclosure, a computer-readable storage medium for storing a computer program is provided. When the computer program is executed by a processor, the method for sending assistance information of any of the above embodiments is implemented.

According to an eighth aspect of embodiments of the disclosure, a computer-readable storage medium for storing a computer program is provided. When the computer program is executed by a processor, the method for receiving assistance information of any of the above embodiments is implemented.

According to the embodiments of the disclosure, the terminal may determine the preferred DRX configuration information of the terminal itself for the requirement of using the DRX, and then carry the preferred DRX configuration information in the DRX assistance information and send it to the network device, so that the network device can know the preferred DRX configuration information of the terminal. The network device configures the terminal according to the preferred DRX configuration information of the terminal, to ensure that different requirements of the terminal are met.

### BRIEF DESCRIPTION OF THE DRAWINGS

In order to clearly illustrate technical solutions of embodiments of the disclosure, a brief description of drawings used in the embodiments is given below. Obviously, the drawings in the following description are only some embodiments of the disclosure, and for those skilled in the art, other drawings can be obtained according to these drawings without inventive work.
FIG. 1 is a flowchart illustrating a method for sending assistance information according to an embodiment of the disclosure.
FIG. 2 is a flowchart illustrating another method for sending assistance information according to an embodiment of the disclosure.
FIG. 3 is a flowchart illustrating a method for receiving assistance information according to an embodiment of the disclosure.
FIG. 4 is a flowchart illustrating another method for receiving assistance information according to an embodiment of the disclosure.
FIG. 5 is a flowchart illustrating yet another method for receiving assistance information according to an embodiment of the disclosure.
FIG. 6 is a flowchart illustrating yet another method for receiving assistance information according to an embodiment of the disclosure.
FIG. 7 is a schematic diagram illustrating an apparatus for sending assistance information according to an embodiment of the disclosure.
FIG. 8 is a schematic diagram illustrating an apparatus for receiving assistance information according to an embodiment of the disclosure.
FIG. 9 is a schematic diagram illustrating a device for receiving assistance information according to an embodiment of the disclosure.
FIG. 10 is a schematic diagram illustrating a device for sending assistance information according to an embodiment of the disclosure.

### DETAILED DESCRIPTION

The technical solutions in the embodiments of the disclosure will be clearly and completely described below with reference to the accompanying drawings in the embodiments of the disclosure. Obviously, the described embodiments are only part of the embodiments of the disclosure, rather than all of the embodiments. Based on the embodiments in the disclosure, all other embodiments obtained by those skilled in the art without inventive work fall within the scope of protection of this disclosure.

The terms used in the embodiments of the disclosure are only for the purpose of describing specific embodiments, and are not intended to limit the embodiments of the disclosure. The singular forms of "a/an" and "the/said" used in the embodiments of the disclosure and appended claims are also intended to include plural forms, unless the context clearly indicates other meanings. It should also be understood that the term "and/or" as used herein refers to and includes any or all possible combinations of one or more associated listed items.

It should be understood that although the terms "first", "second", and "third" may be used in the embodiments of the disclosure to describe various information, the information should not be limited to these terms. These terms are only used to distinguish the same type of information from each other. For example, without departing from the scope of embodiments of the disclosure, a first subscriber identity module (SIM) may also be referred to as a second SIM, and similarly, the second SIM may also be referred to as the first SIM. Depending on the context, the term "if' as used herein can be interpreted as "when", "while" or "in response to determining".

For the purpose of simplicity and ease of understanding, the terms "greater than", "less than", "higher than" and "lower than" are used in the disclosure to represent a size relationship. However, it can be understood by those skilled in the art that the term "greater than" also covers the meaning of "greater than or equal to", and "less than" also covers the meaning of "less than or equal to". The term "higher than" covers the meaning of "higher than or equal to", and the term "less than" covers the meaning of "less than or equal to".

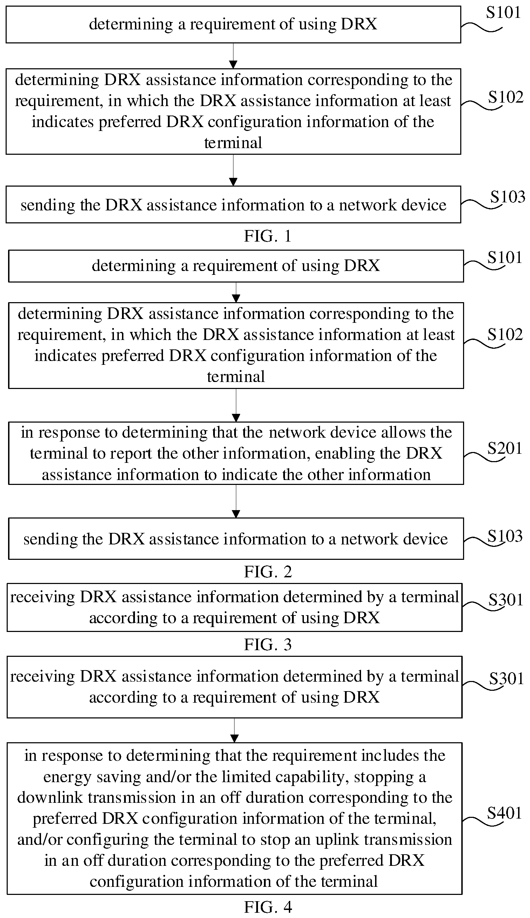

FIG. 1 is a flowchart illustrating a method for sending assistance information according to an embodiment of the disclosure. The method for sending assistance information shown in the embodiments can be applied to a terminal. The terminal includes but is not limited to, a cell phone, a tablet, a wearable device, a sensor, an Internet of Things (IoT) device and other communication devices. The terminal may communicate with the network device. The network device includes but is not limited to a network device in communication systems such as a 4G long term evolution (LTE) system, a 5G new radio (NR) system, a 6G system, etc., e.g., a base station or a core network device.

As illustrated in FIG. 1, the method for sending assistance information includes the following steps at S101- S103.

At S101, a requirement of using discontinuous reception (DRX) is determined.

At S102, DRX assistance information corresponding to the requirement is determined, in which the DRX assistance information at least indicates preferred DRX configuration information of the terminal.

At S103, the DRX assistance information is sent to a network device.

In an embodiment, the terminal may use a DRX mechanism in communication for different requirements. The requirements include at least one of: energy saving, in-device coexistence (IDC) interference, or limited capability.

In an embodiment, the terminal may determine that the requirement of using the DRX includes energy saving when energy saving is required, and then determine DRX assistance information corresponding to the requirement of energy saving. For example, in order to save energy, there is a need to reduce monitoring of downlink transmissions (e.g., a broadcast channel, a physical channel, etc.). The terminal may determine the preferred DRX configuration information according to energy consumption that needs to be saved, such as a DRX activation duration and a DRX cycle, and indicate its preferred DRX configuration information to the network device via the DRX assistance information, so that the network device may determine the preferred DRX configuration information of the terminal according to the DRX assistance information sent by the terminal.

The DRX assistance information may directly indicate the preferred DRX configuration information of the terminal. For example, the DRX assistance information includes the preferred DRX configuration information of the terminal. The DRX assistance information may also indirectly indicate the preferred DRX configuration information of the terminal. For example, the DRX assistance information may include an identifier corresponding to the preferred DRX configuration information of the terminal. The network device may determine that the configuration information corresponding to the identifier in the DRX assistance information is the preferred DRX configuration information of the terminal according to an association relationship between identifiers and pieces of configuration information (e.g., a list consisting of the identifiers and the pieces of configuration information).

If the network device configures the terminal according to the preferred DRX configuration information of the terminal, the terminal may receive downlink information from the network device within the DRX activation duration in a DRX cycle and stop receiving the downlink information from the network device outside of the DRX activation duration in the DRX cycle, so as to meet the requirement of energy saving.

The DRX activation duration can be represented by a DRX activation timer (i.e., DRX-on-DurationTimer).The DRX cycle may include a long DRX cycle (i.e., DRX-LongCycle) and a short DRX cycle (i.e., DRX-ShortCycle).

It should be noted that the DRX configuration information includes, but is not limited to, the DRX activation duration and the DRX cycle. The DRX configuration information can also be set to include other information as needed, such as a short DRX duration (i.e., DRX-ShortCycleTimer), an inactivity timer duration (i.e., DRX-InactivityTimer), and DRX start position information (e.g., a start time domain unit that uses the DRX).

In an embodiment, the terminal may use the DRX to alleviate interference to a certain extent in the presence of the IDC interference, and thus the requirement of using the DRX is the IDC interference.

When the terminal uses the DRX to alleviate the IDC interference, it may determine that the requirement of using the DRX includes the IDC interference, and then determine DRX assistance information corresponding to the requirement of IDC interference. For example, if a 3rd Generation Partnership Project (3GPP) frequency band (e.g., a 4G frequency band, or a 5G frequency band) of the terminal causes an interference (i.e., is causing an interference or will cause an interference) to a wireless local area network (WLAN) frequency band, the terminal can determine the preferred DRX configuration information according to the requirement of alleviating the IDC interference, such as DRX-InactivityTimer, then carry the preferred DRX configuration in the DRX assistance information and send it to the network device.

If the network device configures the terminal according to the preferred DRX configuration information of the terminal, the terminal can reduce a sending power of a 3GPP frequency band signal or even stop sending the 3GPP frequency band signal before the DRX-InactivityTimer expires, to achieve the purpose of energy saving during the use of DRX and also meet the requirement of alleviating the IDC interference.

In an embodiment, when the capability of the terminal is limited, the terminal may use the DRX, and determine the DRX assistance information corresponding to the requirement of energy saving.

For example, when a plurality of SIM cards are provided in the terminal, and the plurality of SIM cards includes a first SIM card and a second SIM card, the capability of the second SIM card to receive signals is limited due to the use of the first SIM card. For example, if the first SIM card and the second SIM card use the same antenna for communication, when the first SIM card uses the antenna for communication, the capability of the second SIM card to receive signals via the antenna is limited, e.g., the second SIM card cannot receive signals using the antenna.

In this case, the terminal may use the DRX when using the second SIM card, e.g., it may determine the DRX assistance information corresponding to the requirement of the limited capability according to the limited capability condition. For example, the terminal may determine a duration of the limited capability of the second SIM card and determine the preferred DRX configuration information according to the duration of the limited capability, such as DRX-InactivityTimer, and then carry the preferred DRX configuration information in the DRX assistance information and send it to the network device.

If the network device configures the second SIM card of the terminal according to the preferred DRX configuration information of the terminal, the second SIM card of the terminal may stop receiving signals before the DRX-InactivityTimer expires. In this way, when the DRX is used by the second SIM of the terminal, not only the purpose of energy saving is achieved, but also the requirement of the limited capability is met.

As can be seen, according to the embodiments of the disclosure, the terminal may determine the preferred DRX configuration information of the terminal itself for the requirement of using the DRX, and then carry the preferred DRX configuration information in the DRX assistance information and send it to the network device, so that the network device can know the preferred DRX configuration information of the terminal. The network device configures the terminal according to the preferred DRX configuration information of the terminal, to ensure that different requirements of the terminal are met.

It should be noted that the DRX assistance information sent by the terminal to the network device only plays an auxiliary role for the network device and does not decide the DRX configuration configured by the network device for the terminal when using the DRX. The network device may determine a DRX configuration indication to the terminal as needed, or may determine the DRX configuration indication for the terminal according to the preferred DRX configuration information of the terminal, or may configure the DRX configuration for the terminal without reference to the preferred DRX configuration information of the terminal.

The following mainly describes the embodiments of the disclosure in the case where the network device configures the DRX configuration for the terminal according to the preferred DRX configuration information of the terminal.

In an embodiment, the preferred DRX configuration information of the terminal includes at least one of :
a DRX cycle;
a DRX activation duration; or
DRX start position information.

The DRX start position information may be represented by a start time domain unit. The time domain unit includes, but is not limited to, a system frame, a sub-frame, a slot, a time domain symbol (e.g., an orthogonal frequency division multiplexing (OFDM) symbol) and the like.

For example, if the time domain unit includes a system frame, the DRX start position information may be represented by a specific time, such as startSystemFrameOffset=8ms. Or, the DRX start position information may be indicated by an identifier, e.g., a system frame with a system frame number (SFN) being 3.

For example, if the time domain unit includes a sub-frame, the DRX start position information may be represented by a specific time, such as startSubframeOffset=8ms. Or, the DRX start position information may be indicated by an identifier, e.g., a sub-frame numbered by 3.

For example, if the time domain unit includes a slot, the DRX start position information may be represented by a specific time, such as startSlotOffset = n*(1/32)ms. Or, the DRX start position information may be indicated by an identifier, e.g., a slot numbered by n.

For example, if the time domain unit includes a time domain symbol, the DRX start position information may be represented by a specific time, such as startSlotOffset = n*(1/32)ms. Or, the DRX start position information may be indicated by an identifier, e.g., a slot symbol numbered by n, n being a positive integer.

In an embodiment, the preferred DRX configuration information of the terminal may include DRX start position information when using DRX for requirement(s) of the IDC interference and/or the limited capability.

For example, when the terminal uses the DRX for alleviating the IDC interference, the 3GPP frequency band of the terminal may cause an interference (i.e., is causing an interference or will cause an interference) to the WLAN frequency band, the terminal may determine a start time of interference and then determine the DRX start position information according to the start time of interference.

If the network device configures the terminal according to the preferred DRX configuration information of the terminal, the terminal can reduce the sending power of the 3GPP frequency band signal or even stop sending the 3GPP frequency band signal at the start time of interference. In this way, when the DRX is used by the terminal, not only the purpose of energy saving is achieved, but also the requirement of alleviating IDC interference is well met.

For example, when the terminal uses the DRX for the requirement of limited capability, if at least the first SIM card and the second SIM card are provided in the terminal, the capability of the second SIM card to receive signals is limited due to the use of the first SIM card. The terminal may determine a start usage time of the first SIM card, and then determine the DRX start position information according to the start usage time.

If the network device configures the terminal according to the preferred DRX configuration information of the terminal, the second SIM card of the terminal may enter into an inactive state and stop receiving signals at the start usage time of the first SIM card, i.e., when the terminal starts using the first SIM card. If the terminal determines the preferred DRX configuration information only for the purpose of energy saving, it is possible that the first SIM card has been used for a certain period of time before the second SIM stops receiving signals, and thus the effect of energy saving is relatively poor. Therefore, according to the embodiments, it is possible for the terminal to use the DRX to save energy as much as possible while meeting the requirement of limited capability, in terms of the limited capability of the second SIM card.

In an embodiment, the DRX assistance information also indicates other information, including at least one of :
the requirement;
a sub-carrier space (SCS) corresponding to the preferred DRX configuration information of the terminal; or
frequency domain information corresponding to the preferred DRX configuration information of the terminal.

In an embodiment, in addition to the preferred DRX configuration information of the terminal, the DRX assistance information may also indicate other information, such as the requirement of the terminal to use the DRX, the SCS corresponding to the preferred DRX configuration information of the terminal, the frequency domain information corresponding to the preferred DRX configuration information of the terminal, and the like.

Similar to indicating the preferred DRX configuration information of the terminal, the DRX assistance information may directly indicate other information, for example, indicating a specific value of the SCS corresponding to the preferred DRX configuration information of the terminal. Or, the DRX assistance information may indirectly indicate other information, for example, indicating an identifier of the SCS corresponding to the preferred DRX configuration information of the terminal.

When there are a plurality of requirements, the terminal may determine preferred DRX configuration information for each requirement respectively, which thus determines a plurality of pieces of preferred DRX configuration information. Since there are the plurality of pieces of preferred DRX configuration information, there will be a plurality of SCSs or a plurality of pieces of frequency domain information corresponding to the plurality of pieces of DRX configuration information. In this case, in addition to the SCS or frequency domain information, the DRX assistance information may also indicate DRX configuration information corresponding to the SCS, or DRX configuration information corresponding to the frequency domain information. Therefore, the network device can accurately determine the SCS or frequency domain information corresponding to each piece of DRX assistance information.

The network device configures the terminal according to the other information in the DRX assistance information, which is conducive to ensuring that the network device can more accurately determine the specific requirement of the terminal to use the DRX and facilitating subsequent operations, so that the configuration can be more in line with the specific requirement of the terminal and meet the actual needs of the terminal.

For example, when the network device configures the terminal according to the SCS corresponding to the preferred DRX configuration information of the terminal, it may determine time domain resources in the DRX configuration configured for the terminal according to the SCS. For example, the larger the SCS, the shorter the duration corresponding to the time domain symbol.

The terminal may also determine the DRX start position information corresponding to the preferred DRX configuration information according to the SCS. For example, if the SCS=15kHz, a number of slots within one system frame (within 10ms) is 10. If the SCS=30kHz, the number of slots within one system frame (within 10ms) is 20. For example, when the SCS corresponding to the preferred DRX configuration information of the terminal is equal to 30kHz, and the DRX start position information is represented by the start time domain unit, if the determined start slot number is n, it indicates the n^{th} slot among 20 slots in the case where the SCS is equal to 30 kHz and the number of slots within one system frame (within 10ms) is 20.

For example, after determining the frequency domain information corresponding to the preferred DRX configuration information of the terminal, the network device may determine that the terminal only expects to use the DRX in the frequency domain range corresponding to the frequency domain information, and the network device may thus configure frequency domain resources in the DRX configuration configured for the terminal in the frequency domain range corresponding to the frequency domain information, so as to meet the requirement of the terminal.

For example, the frequency domain information corresponding to the preferred DRX configuration information of the terminal is a cell identifier, if the network device configures the terminal according to the preferred DRX configuration information of the terminal, it can determine a frequency domain of carriers used by a cell corresponding to the cell identifier, and then configure the terminal to use the DRX in the frequency domain of carriers.

In an embodiment, the frequency domain information corresponding to the preferred DRX configuration information of the terminal includes at least one of :
a cell type, such as a Primary Cell (PCell), a Secondary Cell (SCell), a Primary Secondary Cell (PSCell) and a Special Cell (SpCell);
a cell group type, such as a Master Cell Group (MCG) and a Secondary Cell Group (SCG);
a cell identifier, such as a Physical Cell Identifier (PCI) and a Cell Global Identifier (CGI);
a bandwidth part (BWP) identifier;
a frequency point identifier, such as Absolute Radio Frequency Channel Number (ARFCN);
a bandwidth;
a start position; or
an end position.

The start position and end position can be represented by a frequency point identifier or a physical resource block (PRB).

According to the frequency domain information, the network device can determine a frequency domain resource on which the terminal expects to use the DRX as the frequency domain resource corresponding to the frequency domain information, and then can configure the terminal to use the DRX on the frequency domain resource.

Since the terminal may have one or more requirements at the same time, the terminal may determine the frequency domain information corresponding to the preferred DRX configuration information for each requirement respectively when the terminal has a plurality of requirements at the same time. Therefore, the DRX assistance information may carry the frequency domain information corresponding to the preferred DRX configuration information for each requirement, and the DRX assistance information is then reported to the network device, for example, in the form of a table.

In an embodiment, in the case where the network device determines that the requirement of the terminal to use the DRX includes the energy saving, if the network device configures the terminal according to the preferred DRX configuration information of the terminal, the network device may stop a downlink transmission in an off duration corresponding to the preferred DRX configuration information of the terminal, and/or configure the terminal to stop an uplink transmission in an off duration corresponding to the preferred DRX configuration information of the terminal. Correspondingly, the terminal may stop receiving downlink information and/or stop sending uplink information in the off duration, to meet the requirement of the energy saving of the terminal.

In an embodiment, in the case where the network device determines that the requirement of the terminal to use the DRX includes the limited capability, if the network device configures the terminal according to the preferred DRX configuration information of the terminal, the network device may stop the downlink transmission in the off duration corresponding to the preferred DRX configuration information of the terminal, and/or configure the terminal to stop the uplink transmission in the off duration corresponding to the preferred DRX configuration information of the terminal. Correspondingly, the terminal may stop receiving the downlink information and/or stop sending the uplink information in the off duration, to meet the requirement of the energy saving of the terminal.

In an embodiment, in the case where the requirement of the terminal to use the DRX includes IDC interference, the other information may further include at least one of :
interfering frequency band information, or interfered frequency band information;
in which the interfering frequency band information and the interfered frequency band information may include frequency domain information, the contents of which may be the same as the contents included in the frequency domain information corresponding to the preferred DRX configuration information of the terminal as described above, and will not be repeated herein.

The interfering frequency band information and the interfered frequency band information may also include a frequency domain type, which includes, but is not limited to, a 3GPP frequency band (e.g., 4G, 5G, etc.), Wi-Fi, Bluetooth, infrared, and positioning (e.g., global navigation satellite system (GNSS)).

For example, if the network device determines that the requirement of the terminal to use the DRX includes the IDC interference, and the 3GPP frequency band is an interfered frequency band, when the network device configures the terminal according to the preferred DRX configuration information of the terminal, the network device may increase a power of downlink transmission in an activation state interval corresponding to the preferred DRX configuration information of the terminal, in order to resist the interference experienced by the 3GPP frequency band and ensure as much as possible that the terminal is able to successfully acquire the information transmitted by the network device on the 3GPP frequency band.

For example, if the network device determines that the requirement of the terminal to use the DRX includes the IDC interference, and the 3GPP frequency band is an interfering frequency band, when the network device configures the terminal according to the preferred DRX configuration information of the terminal, the network device may configure the terminal to reduce a power of uplink transmission in the off duration corresponding to the preferred DRX configuration information of the terminal, in order to reduce the interference from the 3GPP frequency band to other frequency bands, and achieve the purpose of the energy saving to a certain extent.

FIG. 2 is a flowchart illustrating a method for sending assistance information according to an embodiment of the disclosure. As illustrated in FIG. 2, the method further includes the following step at S201.

At S201, in a case where the network device allows the terminal to report the other information, the DRX assistance information indicates the other information.

In an embodiment, the network device may indicate to the terminal, whether or not the terminal is allowed to report other information. For example, it may specifically indicate whether or not the terminal is allowed to report one or more of: the requirement, the SCS corresponding to the preferred DRX configuration information of the terminal, and the frequency domain information corresponding to the preferred DRX configuration information of the terminal.

The network device may determine whether or not to allow the reporting of other information according to its own capability. For example, the network device allows the terminal to report the requirement in the other information only when it is capable of analyzing the requirement of the terminal to use the DRX, and it does not allow the terminal to report the requirement in the other information when it is not capable of analyzing the requirement of the terminal to use the DRX.

The terminal sends other information to the network device through the DRX assistance information only when the network device allows the terminal to report the other information, so as to avoid the waste of communication resources caused by reporting to the network device, information that the network device is incapable of processing.

In an embodiment, sending the DRX assistance information to the network device, includes:
in response to a target condition being satisfied, sending the DRX assistance information to the network device, in which the target condition includes at least one of :
a condition that the requirement is a target requirement; or
a condition that a prohibit timer for sending the DRX assistance information has not expired or is not running.

The network device may determine the target condition according to the requirement and indicate it to the terminal, or the terminal may determine the target condition according to predefined rules (e.g., which are specified in a protocol).

In an embodiment, if the requirement included in the target condition is a target requirement, when the terminal needs to use the DRX, the terminal may first determine whether the requirement of using the DRX is the target requirement, then send the DRX assistance information to the network device only when it is the target requirement, and does not send the DRX assistance information to the network device if the requirement is other requirement.

The network device may determine whether or not to allow the reporting of other information according to its own capability. For example, if the network device has the capability to configure an appropriate DRX configuration for the terminal when the requirement of the terminal to use the DRX is the IDC interference, the network device may allow the terminal to send the DRX assistance information to the network device when the requirement to use the DRX is the IDC interference. For example, if the network device does not have the capability to configure an appropriate DRX configuration for the terminal when the requirement to use the DRX is the IDC interference, it may not allow the terminal to send the DRX assistance information to the network device when the requirement to use the DRX is the IDC interference.

In an embodiment, if the target condition includes a prohibit timer, when the terminal needs to use the DRX, the terminal can first determine whether the prohibit timer expires. If the prohibit timer does not expire or is not running, the terminal can send the DRX assistance information to the network device. If the prohibit timer expires or is running, the terminal does not send the DRX assistance information to the network device. In this way, it can prevent the terminal from frequently sending the DRX assistance information to the network devices, thus avoiding the waste of communication resources.

For different requirements, the prohibit timer (which mainly refers to an expiration duration) may be the same or different, which may be configured as needed.

In an embodiment, the terminal may have one or more requirements at the same time. If the requirement includes a plurality of requirements, the DRX assistance information includes DRX assistance information corresponding to each requirement, in which the preferred DRX configuration information or other information in the DRX assistance information corresponds to the requirement.

The preferred DRX configuration information in each piece of the DRX assistance information can be different or the same. For example, the preferred DRX configuration information in each piece of the DRX assistance information can be the same by default or can be set to be the same. Therefore, it is only necessary to carry the preferred DRX configuration information in the DRX assistance information corresponding to one requirement, and there is no need to carry the preferred DRX configuration information in the DRX assistance information (which can however carry other information) corresponding to other requirements, which is conducive to saving communication resources.

The network device may also indicate to the terminal, whether or not the terminal is allowed to report the DRX assistance information corresponding to a plurality of requirements.

If the terminal is not allowed to report the DRX assistance information corresponding to the plurality of requirements, when there are the plurality of requirements, the terminal may determine one piece of DRX assistance information corresponding to one of the requirements or determine one piece of DRX assistance information corresponding to the plurality of requirements, and send the determined one piece of DRX assistance information to the network device.

If the terminal is allowed to report respective DRX assistance information corresponding to the plurality of requirements, when there are the plurality of requirements, the terminal may determine a piece of DRX assistance information corresponding to each requirement respectively and send the determined pieces of DRX assistance information to the network device.

FIG. 3 is a flowchart illustrating a method for receiving assistance information according to an embodiment of the disclosure. The method for receiving assistance information shown in the embodiment can be applied to a network device. The network device may communicate with the terminal. The network device includes but is not limited to a base station in communication systems such as a 4G system, a 5G system, and a 6G system. The terminal includes but is not limited to, a cell phone, a tablet, a wearable device, a sensor, an IoT device and other communication devices.

As illustrated in FIG. 3, the method for receiving assistance information includes the following step at S301.

At S301, DRX assistance information determined by a terminal according to a requirement of using DRX is received.

In an embodiment, the terminal may communicate using the DRX (specifically referring to using a DRX mechanism) for different requirements. The requirement includes at least one of : energy saving, IDC interference, or limited capability.

In an embodiment, the terminal may determine that the requirement of using the DRX includes energy saving when energy saving is required, and then determine DRX assistance information corresponding to the requirement of energy saving. For example, in order to save energy, there is a need to reduce monitoring of downlink transmissions (e.g., a broadcast channel, a physical channel, etc.). The terminal may determine the preferred DRX configuration information according to energy consumption that needs to be saved, such as a DRX activation duration and a DRX cycle, and indicate its preferred DRX configuration information to the network device via the DRX assistance information, so that the network device may determine the preferred DRX configuration information of the terminal according to the DRX assistance information sent by the terminal.

The DRX assistance information may directly indicate the preferred DRX configuration information of the terminal. For example, the DRX assistance information includes the preferred DRX configuration information of the terminal. The DRX assistance information may also indirectly indicate the preferred DRX configuration information of the terminal. For example, the DRX assistance information may include an identifier corresponding to the preferred DRX configuration information of the terminal. The network device may determine that the configuration information corresponding to the identifier in the DRX assistance information is the preferred DRX configuration information of the terminal according to an association relationship between identifiers and pieces of configuration information (e.g., a list consisting of the identifiers and the pieces of configuration information).

If the network device configures the terminal according to the preferred DRX configuration information of the terminal, the terminal may receive downlink information from the network device within the DRX activation duration in a DRX cycle and stop receiving the downlink information from the network device outside of the DRX activation duration in the DRX cycle, so as to meet the requirement of energy saving.

The DRX activation duration can be represented by a DRX activation timer (i.e., DRX-on-DurationTimer).The DRX cycle may include a long DRX cycle (i.e., DRX-LongCycle) and a short DRX cycle (i.e., DRX-ShortCycle).

It should be noted that the DRX configuration information includes, but is not limited to, the DRX activation duration and the DRX cycle. The DRX configuration information can also be set to include other information as needed, such as a short DRX duration (i.e., DRX-ShortCycleTimer), an inactivity timer duration (i.e., DRX-InactivityTimer), and DRX start position information (e.g., a start time domain unit that uses the DRX).

In an embodiment, the terminal may use the DRX to alleviate interference to a certain extent in the presence of the IDC interference, and thus the requirement of using the DRX is the IDC interference.

When the terminal uses the DRX to alleviate the IDC interference, it may determine that the requirement of using the DRX includes the IDC interference, and then determine DRX assistance information corresponding to the requirement of IDC interference. For example, if a 3GPP frequency band (e.g., a 4G frequency band, or a 5G frequency band) of the terminal causes an interference (i.e., is causing an interference or will cause an interference) to a WLAN frequency band, the terminal can determine the preferred DRX configuration information according to the requirement of alleviating the IDC interference, such as DRX-InactivityTimer, then carry the preferred DRX configuration in the DRX assistance information and send it to the network device.

If the network device configures the terminal according to the preferred DRX configuration information of the terminal, the terminal can reduce a sending power of a 3GPP frequency band signal or even stop sending the 3GPP frequency band signal before the DRX-InactivityTimer expires, to achieve the purpose of energy saving during the use of DRX and also meet the requirement of alleviating the IDC interference.

In an embodiment, when the capability of the terminal is limited, the terminal may use the DRX, and determine the DRX assistance information corresponding to the requirement of energy saving.

For example, when a plurality of SIM cards are provided in the terminal, and the plurality of SIM cards includes a first SIM card and a second SIM card, the ability of the second SIM card to receive signals is constrained due to the use of the first SIM card. For example, if the first SIM card and the second SIM card use the same antenna for communication, when the first SIM card uses the antenna for communication, the ability of the second SIM card to receive signals via the antenna is constrained, e.g., it cannot receive signals using the antenna.

In this case, the terminal may use the DRX when using the second SIM card, e.g., it may determine the DRX assistance information corresponding to the requirement of the limited capability according to the limited capability condition. For example, the terminal may determine a duration of the limited capability of the second SIM card and determine the preferred DRX configuration information according to the duration of the limited capability, such as DRX-InactivityTimer, and then carry the preferred DRX configuration information in the DRX assistance information and send it to the network device.

If the network device configures the second SIM card of the terminal according to the preferred DRX configuration information of the terminal, the second SIM card of the terminal may stop receiving signals before the DRX-InactivityTimer expires. In this way, when the DRX is used by the second SIM of the terminal, not only the purpose of energy saving is achieved, but also the requirement of the limited capability is met.

According to the embodiments of the disclosure, the terminal may determine the preferred DRX configuration information of the terminal itself for the requirement of using the DRX, and then carry the preferred DRX configuration information in the DRX assistance information and send it to the network device, so that the network device can know the preferred DRX configuration information of the terminal. The network device configures the terminal according to the preferred DRX configuration information of the terminal, to ensure that different requirements of the terminal are met.

It should be noted that the DRX assistance information sent by the terminal to the network device only plays an auxiliary role for the network device and does not decide the DRX configuration configured by the network device for the terminal when using the DRX. The network device may determine a DRX configuration indication to the terminal as needed, or may determine the DRX configuration indication for the terminal according to the preferred DRX configuration information of the terminal, or may configure the DRX configuration for the terminal without reference to the preferred DRX configuration information of the terminal.

The following mainly describes the embodiments of the disclosure in the case where the network device configures the DRX configuration for the terminal according to the preferred DRX configuration information of the terminal.

In an embodiment, the method further includes:
determining preferred DRX configuration information of the terminal according to the DRX assistance information;
in which the preferred DRX configuration information of the terminal includes at least one of :
   a DRX cycle;
   a DRX activation duration; or
   DRX start position information.

The DRX start position information may be represented by a start time domain unit. The time domain unit includes, but is not limited to, a system frame, a sub-frame, a slot, a time domain symbol (e.g., an OFDM symbol) and the like.

For example, if the time domain unit includes a system frame, the DRX start position information may be represented by a specific time, such as startSystemFrameOffset=8ms. Or, the DRX start position information may be indicated by an identifier, e.g., a system frame with SFN being 3.

For example, if the time domain unit includes a sub-frame, the DRX start position information may be represented by a specific time, such as startSubframeOffset=8ms. Or, the DRX start position information may be indicated by an identifier, e.g., a sub-frame numbered by 3.

For example, if the time domain unit includes a slot, the DRX start position information may be represented by a specific time, such as startSlotOffset = n*(1/32)ms. Or, the DRX start position information may be indicated by an identifier, e.g., a slot numbered by n.

For example, if the time domain unit includes a time domain symbol, the DRX start position information may be represented by a specific time, such as startSlotOffset = n*(1/32)ms. Or, the DRX start position information may be indicated by an identifier, a slot symbol numbered by n, n being a positive integer.

In an embodiment, the preferred DRX configuration information of the terminal may include DRX start position information when using DRX for requirement(s) of the IDC interference and/or limited capability.

For example, when the terminal uses the DRX for alleviating the IDC interference, the 3GPP frequency band of the terminal may cause an interference (i.e., is causing an interference or will cause an interference) to the WLAN frequency band, the terminal may determine a start time of interference and then determine the DRX start position information according to the start time of interference.

If the network device configures the terminal according to the preferred DRX configuration information of the terminal, the terminal can reduce the sending power of the 3GPP frequency band signal or even stop sending the 3GPP frequency band signal at the start time of interference. In this way, when the DRX is used by the terminal, not only the purpose of energy saving is achieved, but also the requirement of alleviating IDC interference is well met.

For example, when the terminal uses the DRX for the requirement of limited capability, if at least the first SIM card and the second SIM card are provided in the terminal, the capability of the second SIM card to receive signals is limited due to the use of the first SIM card. The terminal may determine a start usage time of the first SIM card, and then determine the DRX start position information according to the start usage time.

If the network device configures the terminal according to the preferred DRX configuration information of the terminal, the second SIM card of the terminal may enter into an inactive state and stop receiving signals at the start usage time of the first SIM card, i.e., when the terminal starts using the first SIM card. If the terminal determines the preferred DRX configuration information only for the purpose of energy saving, it is possible that the first SIM card has been used for a certain period of time before the second SIM stops receiving signals, and thus the effect of energy saving is relatively poor. Therefore, according to the embodiments, it is possible for the terminal to use the DRX to save energy as much as possible while meeting the requirement of limited capability, in terms of the limited capability of the second SIM card.

In an embodiment, the method further includes:
determining other information according to the DRX assistance information, in which the other information includes at least one of :
the requirement;
a SCS corresponding to the preferred DRX configuration information of the terminal; or
frequency domain information corresponding to the preferred DRX configuration information of the terminal.

In an embodiment, in addition to the preferred DRX configuration information of the terminal, the DRX assistance information may also indicate other information, such as the requirement of the terminal to use the DRX, the SCS corresponding to the preferred DRX configuration information of the terminal, the frequency domain information corresponding to the preferred DRX configuration information of the terminal, and the like.

Similar to indicating the preferred DRX configuration information of the terminal, the other information may be directly determined according to the DRX assistance information . For example, the preferred DRX configuration information of the terminal is determined according to a specific value in the DRX assistance information. Or, the other information may be indirectly determined. For example, the SCS corresponding to the preferred DRX configuration information of the terminal is determined according to an identifier in the DRX assistance information.

When there are a plurality of requirements, the terminal may determine preferred DRX configuration information for each requirement respectively, which thus determines a plurality of pieces of preferred DRX configuration information. Since there are the plurality of pieces of preferred DRX configuration information, there will be a plurality of SCSs or a plurality of pieces of frequency domain information corresponding to the plurality of pieces of DRX configuration information. In this case, in addition to the SCS or frequency domain information, the DRX assistance information may also indicate DRX configuration information corresponding to the SCS, or DRX configuration information corresponding to the frequency domain information. Therefore, the network device can accurately determine the SCS or frequency domain information corresponding to each piece of DRX assistance information.

The network device configures the terminal according to the other information in the DRX assistance information, which is conducive to ensuring that the network device can more accurately determine the specific requirement of the terminal to use the DRX and facilitating subsequent operations, so that the configuration can be more in line with the specific requirement of the terminal and meet the actual needs of the terminal.

For example, when the network device configures the terminal according to the SCS corresponding to the preferred DRX configuration information of the terminal, it may determine time domain resources in the DRX configuration configured for the terminal according to the SCS. For example, the larger the SCS, the shorter the duration corresponding to the time domain symbol.

The terminal may also determine the DRX start position information corresponding to the preferred DRX configuration information according to the SCS. For example, if the SCS=15kHz, a number of slots within one system frame (within 10ms) is 10. If the SCS=30kHz, the number of slots within one system frame (within 10ms) is 20. For example, when the SCS corresponding to the preferred DRX configuration information of the terminal is equal to 30kHz, and the DRX start position information is represented by the start time domain unit, if the determined start slot number is n, it indicates the n^{th} slot among 20 slots in the case where the SCS is equal to 30 kHz and the number of slots within one system frame (within 10ms) is 20.

For example, after determining the frequency domain information corresponding to the preferred DRX configuration information of the terminal, the network device may determine that the terminal only expects to use the DRX in the frequency domain range corresponding to the frequency domain information, and the network device may thus configure frequency domain resources in the DRX configuration configured for the terminal in the frequency domain range corresponding to the frequency domain information, so as to meet the requirement of the terminal.

For example, the frequency domain information corresponding to the preferred DRX configuration information of the terminal is a cell identifier, if the network device configures the terminal according to the preferred DRX configuration information of the terminal, it can determine a frequency domain of carriers used by a cell corresponding to the cell identifier, and then configure the terminal to use the DRX in the frequency domain of carriers.

In an embodiment, the frequency domain information corresponding to the preferred DRX configuration information of the terminal includes at least one of :
a cell type, such as a PCell, a SCell, a PSCell and a SpCell;
a cell group type, such as a MCG and a SCG;
a cell identifier, such as a PCI and a CGI;
a BWP identifier;
a frequency point identifier, such as a ARFCN;
a bandwidth;
a start position; or
an end position.

The start position and end position can be represented by a frequency point identifier or a PRB.

According to the frequency domain information, the network device can determine a frequency domain resource on which the terminal expects to use the DRX as the frequency domain resource corresponding to the frequency domain information, and then can configure the terminal to use the DRX on the frequency domain resource.

Since the terminal may have one or more requirements at the same time, the terminal may determine the frequency domain information corresponding to the preferred DRX configuration information for each requirement respectively when the terminal has a plurality of requirements at the same time. Therefore, the DRX assistance information may carry the frequency domain information corresponding to the preferred DRX configuration information for each requirement, and the DRX assistance information is then reported to the network device, for example, in the form of a table.

FIG. 4 is a flowchart illustrating another method for receiving assistance information according to an embodiment of the disclosure. As illustrated in FIG. 4, the method includes the following step at S401.

At S401, in response to determining that the requirement includes the energy saving and/or the limited capability, a downlink transmission is stopped in an off duration corresponding to the preferred DRX configuration information of the terminal, and/or the terminal is configured to stop an uplink transmission in an off duration corresponding to the preferred DRX configuration information of the terminal.

In an embodiment, in the case where the network device determines that the requirement of the terminal to use the DRX includes the energy saving, if the network device configures the terminal according to the preferred DRX configuration information of the terminal, the network device may stop a downlink transmission in an off duration corresponding to the preferred DRX configuration information of the terminal, and/or configure the terminal to stop an uplink transmission in an off duration corresponding to the preferred DRX configuration information of the terminal. Correspondingly, the terminal may stop receiving downlink information and/or stop sending uplink information in the off duration, to meet the requirement of the energy saving of the terminal.

In an embodiment, in the case where the network device determines that the requirement of the terminal to use the DRX includes the limited capability, if the network device configures the terminal according to the preferred DRX configuration information of the terminal, the network device may stop the downlink transmission in the off duration corresponding to the preferred DRX configuration information of the terminal, and/or configure the terminal to stop the uplink transmission in the off duration corresponding to the preferred DRX configuration information of the terminal. Correspondingly, the terminal may stop receiving the downlink information and/or stop sending the uplink information in the off duration, to meet the requirement of the energy saving of the terminal.

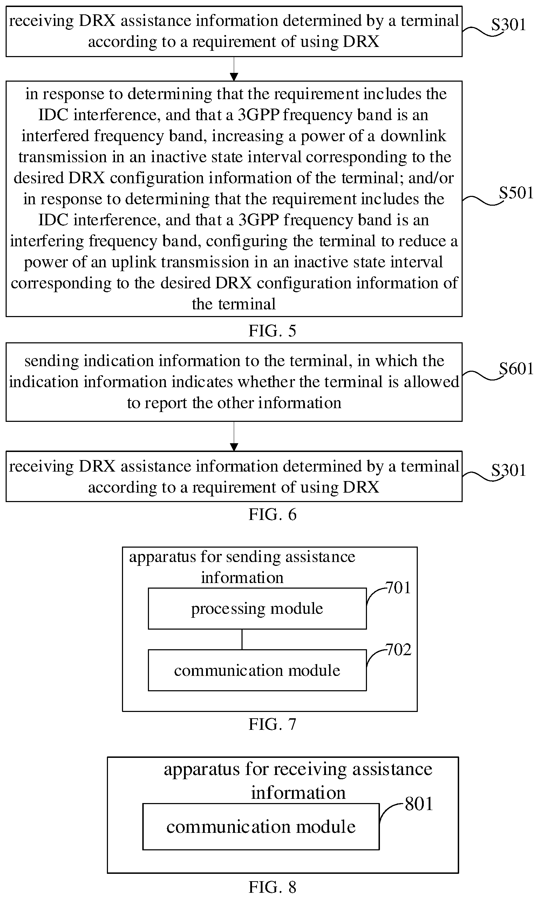

FIG. 5 is a flowchart illustrating yet another method for receiving assistance information according to an embodiment of the disclosure. As illustrated in FIG. 5, the method includes the following step at S501.

At S501, in response to determining that the requirement includes the IDC interference, and that a 3GPP frequency band is an interfered frequency band, a power of a downlink transmission in an off duration corresponding to the preferred DRX configuration information of the terminal is increased; and/or in response to determining that the requirement includes IDC interference, and that a 3GPP frequency band is an interfering frequency band, the terminal is configured to reduce a power of an uplink transmission in an off duration corresponding to the preferred DRX configuration information of the terminal.

In an embodiment, in the case where the requirement of the terminal to use the DRX includes IDC interference, the other information may further include at least one of :
interfering frequency band information, or interfered frequency band information;
in which the interfering frequency band information and the interfered frequency band information may include frequency domain information, the contents of which may be the same as the contents included in the frequency domain information corresponding to the preferred DRX configuration information of the terminal as described above, and will not be repeated herein.

The interfering frequency band information and the interfered frequency band information may also include a frequency domain type, which includes, but is not limited to, a 3GPP frequency band (e.g., 4G, 5G, etc.), Wi-Fi, Bluetooth, infrared, and positioning (e.g., GNSS).

For example, if the network device determines that the requirement of the terminal to use the DRX includes the IDC interference, and the 3GPP frequency band is an interfered frequency band, when the network device configures the terminal according to the preferred DRX configuration information of the terminal, the network device may increase a power of downlink transmission in an activation state interval corresponding to the preferred DRX configuration information of the terminal, in order to resist the interference experienced by the 3GPP frequency band and ensure as much as possible that the terminal is able to successfully acquire the information transmitted by the network device on the 3GPP frequency band.

For example, if the network device determines that the requirement of the terminal to use the DRX includes the IDC interference, and the 3GPP frequency band is an interfering frequency band, when the network device configures the terminal according to the preferred DRX configuration information of the terminal, the network device may configure the terminal to reduce a power of uplink transmission in the off duration corresponding to the preferred DRX configuration information of the terminal, in order to reduce the interference from the 3GPP frequency band to other frequency bands, and achieve the purpose of the energy saving to a certain extent.

FIG. 6 is a flowchart illustrating yet another method for receiving assistance information according to an embodiment of the disclosure. As illustrated in FIG. 6, the method includes the following step at S601.

At S601, indication information is sent to the terminal, in which the indication information indicates whether the terminal is allowed to report the other information.

In an embodiment, the network device may indicate to the terminal, whether or not the terminal is allowed to report other information. For example, it may specifically indicate whether or not the terminal is allowed to report one or more of: the requirement, the SCS corresponding to the preferred DRX configuration information of the terminal, and the frequency domain information corresponding to the preferred DRX configuration information of the terminal.

The network device may determine whether or not to allow the reporting of other information according to its own capability. For example, the network device allows the terminal to report the requirement in the other information only when it is capable of analyzing the requirement of the terminal to use the DRX, and it does not allow the terminal to report the requirement in the other information when it is not capable of analyzing the requirement of the terminal to use the DRX.

The terminal sends other information to the network device through the DRX assistance information only when the network device allows the terminal to report the other information, so as to avoid the waste of communication resources caused by reporting to the network device, information that the network device is incapable of processing.

In an embodiment, the method further includes:
sending indication information to the terminal, in which the indication information indicates the terminal to send the DRX assistance information to the network device in response to a target condition being satisfied,
in which the target condition includes at least one of :
   a condition that the requirement is a target requirement; or
   a condition that a prohibit timer for sending the DRX assistance information has not expired or is not running.
   In an embodiment, if the requirement included in the target condition is a target requirement, when the terminal needs to use the DRX, the terminal may first determine whether the requirement of using the DRX is the target requirement, then send the DRX assistance information to the network device only when it is the target requirement, and does not send the DRX assistance information to the network device if the requirement is other requirement.

The network device may determine whether or not to allow the reporting of other information according to its own capability. For example, if the network device has the capability to configure an appropriate DRX configuration for the terminal when the requirement of the terminal to use the DRX is the IDC interference, the network device may allow the terminal to send the DRX assistance information to the network device when the requirement to use the DRX is the IDC interference. For example, if the network device does not have the capability to configure an appropriate DRX configuration for the terminal when the requirement to use the DRX is the IDC interference, it may not allow the terminal to send the DRX assistance information to the network device when the requirement to use the DRX is the IDC interference.

In an embodiment, if the target condition includes a prohibit timer, when the terminal needs to use the DRX, the terminal can first determine whether the prohibit timer expires. If the prohibit timer does not expire or is not running, the terminal can send the DRX assistance information to the network device. If the prohibit timer expires or is running, the terminal does not send the DRX assistance information to the network device. In this way, it can prevent the terminal from frequently sending the DRX assistance information to the network devices, thus avoiding the waste of communication resources.

In an embodiment, the terminal may have one or more requirements at the same time. If the requirement includes a plurality of requirements, the DRX assistance information includes DRX assistance information corresponding to each requirement, in which the preferred DRX configuration information or other information in the DRX assistance information corresponds to the requirement.

The preferred DRX configuration information in each piece of the DRX assistance information can be different or the same. For example, the preferred DRX configuration information in each piece of the DRX assistance information can be the same by default or can be set to be the same. Therefore, it is only necessary to carry the preferred DRX configuration information in the DRX assistance information corresponding to one requirement, and there is no need to carry the preferred DRX configuration information in the DRX assistance information (which can however carry other information) corresponding to other requirements, which is conducive to saving communication resources.

In an embodiment, if the requirement includes a plurality of requirements, the DRX assistance information includes DRX assistance information corresponding to each requirement.

In an embodiment, the terminal may have one or more requirements at the same time. If the requirement includes a plurality of requirements, the DRX assistance information includes DRX assistance information corresponding to each requirement, in which the preferred DRX configuration information or other information in the DRX assistance information corresponds to the requirement.

The preferred DRX configuration information in each piece of the DRX assistance information can be different or the same. For example, the preferred DRX configuration information in each piece of the DRX assistance information can be the same by default or can be set to be the same. Therefore, it is only necessary to carry the preferred DRX configuration information in the DRX assistance information corresponding to one requirement, and there is no need to carry the preferred DRX configuration information in the DRX assistance information (which can however carry other information) corresponding to other requirements, which is conducive to saving communication resources.

The network device may also indicate to the terminal, whether or not the terminal is allowed to report the DRX assistance information corresponding to a plurality of requirements.

If the terminal is not allowed to report the DRX assistance information corresponding to the plurality of requirements, when there are the plurality of requirements, the terminal may determine one piece of DRX assistance information corresponding to one of the requirements or determine one piece of DRX assistance information corresponding to the plurality of requirements, and send the determined one piece of DRX assistance information to the network device.

If the terminal is allowed to report respective DRX assistance information corresponding to the plurality of requirements, when there are the plurality of requirements, the terminal may determine a piece of DRX assistance information corresponding to each requirement respectively and send the determined pieces of DRX assistance information to the network device.

Corresponding to the above embodiments of the method for sending assistance information and the method for receiving assistance information, the disclosure also provides embodiments of an apparatus for sending assistance information and an apparatus for receiving assistance information.

FIG. 7 is a schematic diagram illustrating an apparatus for sending assistance information according to an embodiment of the disclosure. The apparatus for sending assistance information shown in this embodiment may be applied to a terminal. The terminal includes but is not limited to, a cell phone, a tablet, a wearable device, a sensor, an IoT device and other communication devices. The terminal may communicate with the network device. The network device includes but is not limited to a network device in communication systems such as a 4G LTE system, a 5G NR system, a 6G system, etc., e.g., a base station or a core network.

As illustrated in FIG. 7, the apparatus for sending assistance information includes: a processing module 701 and a communication module 702.

The processing module 701 is configured to determine a requirement of using DRX, and determine DRX assistance information corresponding to the requirement, in which the DRX assistance information at least indicates preferred DRX configuration information of the terminal.

The communication module 702 is configured to send the DRX assistance information to a network device.

In an embodiment, the requirement includes at least one of :
energy saving, IDC interference, or limited capability.

In an embodiment, the preferred DRX configuration information of the terminal includes at least one of :
a DRX cycle;
a DRX activation duration; or
DRX start position information.

In an embodiment, the DRX assistance information indicates other information, including at least one of :
the requirement;
a SCS corresponding to the preferred DRX configuration information of the terminal; or
frequency domain information corresponding to the preferred DRX configuration information of the terminal.

In an embodiment, in response to determining that the network device allows the terminal to report the other information, the DRX assistance information further indicates the other information.

In an embodiment, the frequency domain information includes at least one of :
a cell type;
a cell group type;
a cell identifier;
a BWP identifier;
a frequency point identifier;
a bandwidth;
a start position; or
an end position.

In an embodiment, the communication module is configured to, in response to a target condition being satisfied, send the DRX assistance information to the network device, in which the target condition includes at least one of :
a condition that the requirement is a target requirement; or
a condition that a prohibit timer for sending the DRX assistance information has not expired or is not running.

In an embodiment, in response to the requirement including a plurality of requirements, the DRX assistance information includes DRX assistance information corresponding to each requirement.

FIG. 8 is a schematic diagram illustrating an apparatus for receiving assistance information according to an embodiment of the disclosure. The apparatus for receiving assistance information shown in this embodiment may be applied to a network device. The network device may communicate with the terminal. The network device includes but is not limited to a base station in communication systems such as a 4G LTE system, a 5G system, a 6G system, etc. The terminal includes but is not limited to, a cell phone, a tablet, a wearable device, a sensor, an IoT device and other communication devices.

As illustrated in FIG. 8, the apparatus for receiving assistance information includes a communication module 801.

The communication module 801 is configured to receive DRX assistance information determined by a terminal according to a requirement of using DRX.

In an embodiment, the requirement includes at least one of :
energy saving, IDC interference, or limited capability.

In an embodiment, the method further includes:
determining preferred DRX configuration information of the terminal according to the DRX assistance information;
in which the preferred DRX configuration information of the terminal includes at least one of :
   a DRX cycle;
   a DRX activation duration; or
   DRX start position information.

In an embodiment, the apparatus further includes a processing module.

The processing module is configured to determine other information according to the DRX assistance information, the other information including at least one of :
the requirement;
a SCS corresponding to the preferred DRX configuration information of the terminal; or
frequency domain information corresponding to the preferred DRX configuration information of the terminal.

In an embodiment, the apparatus further includes the processing module.

The processing module is configured to, in response to determining that the requirement includes the energy saving and/or the limited capability, stop a downlink transmission in an off duration corresponding to the preferred DRX configuration information of the terminal, and/or configure the terminal to stop an uplink transmission in an off duration corresponding to the preferred DRX configuration information of the terminal.

In an embodiment, the apparatus further includes the processing module.

The processing module is configured to, in response to determining that the requirement includes the IDC interference, and that a 3GPP frequency band is an interfered frequency band, increase a power of a downlink transmission in an off duration corresponding to the preferred DRX configuration information of the terminal; and/or,
in response to determining that the requirement includes the IDC interference, and that a 3GPP frequency band is an interfering frequency band, configure the terminal to reduce a power of an uplink transmission in an off duration corresponding to the preferred DRX configuration information of the terminal.

In an embodiment, the communication module is configured to: send indication information to the terminal, in which the indication information indicates whether the terminal is allowed to report the other information.

In an embodiment, the frequency domain information includes at least one of :
a cell type;
a cell group type;
a cell identifier;
a BWP identifier;
a frequency point identifier;
a bandwidth;
a start position; or
an end position.

In an embodiment, the communication module is configured to: send indication information to the terminal, in which the indication information indicates the terminal to send the DRX assistance information to the network device in response to a target condition being satisfied,
in which the target condition includes at least one of :
a condition that the requirement is a target requirement; or
a condition that a prohibit timer for sending the DRX assistance information has not expired or is not running.

In an embodiment, in response to the requirement including a plurality of requirements, the DRX assistance information includes DRX assistance information corresponding to each requirement.

With respect to the apparatuses in the above embodiments, the specific manner in which each module performs an operation has been described in detail in the relevant method embodiments, which will not be described in detail herein.

Since the apparatus embodiments basically correspond to the method embodiments, relevant contents can refer to the descriptions of the method embodiments. The apparatus embodiments described above are merely exemplary, in which the modules described as separate components may or may not be physically separated, and the components shown as modules may or may not be physical modules, i.e., they may be located in a single place or may be distributed into a plurality of network modules. Some or all of these modules may be selected according to actual needs to fulfill the purpose of the solution of the embodiments, which can be understood and implemented by those skilled in the art without inventive work.

The embodiments of the disclosure also provide a communication device, including a processor and a memory for storing a computer program. When the computer program is executed by the processor, the method for sending assistance information described in any of the above embodiments is implemented.

The embodiments of the disclosure also provide a communication device, including a processor and a memory for storing a computer program. When the computer program is executed by the processor, the method for receiving assistance information described in any of the above embodiments is implemented.

The embodiments of the disclosure also provide a computer-readable storage medium for storing a computer program. When the computer program is executed by a processor, the steps in the method for sending assistance information described in any of the above embodiments are implemented.

The embodiments of the disclosure also provide a computer-readable storage medium for storing a computer program. When the computer program is executed by a processor, the steps in the method for receiving assistance information described in any of the above embodiments are implemented.

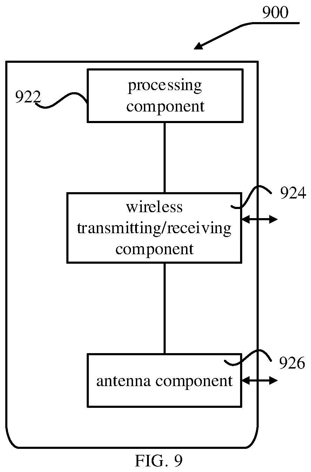

FIG. 9 is a schematic diagram illustrating a device 900 for receiving assistance information according to an embodiment of the disclosure. The device 900 may be provided as a base station. As illustrated in FIG. 9, the device 900 includes a processing component 922, a wireless transmitting/receiving component 924, an antenna component 926, and a signal processing portion specific to a radio interface. The processing component 922 may further include one or more processors. One of the processors in the processing component 922 may be configured to implement the steps in the method for receiving assistance information described in any of the above embodiments.

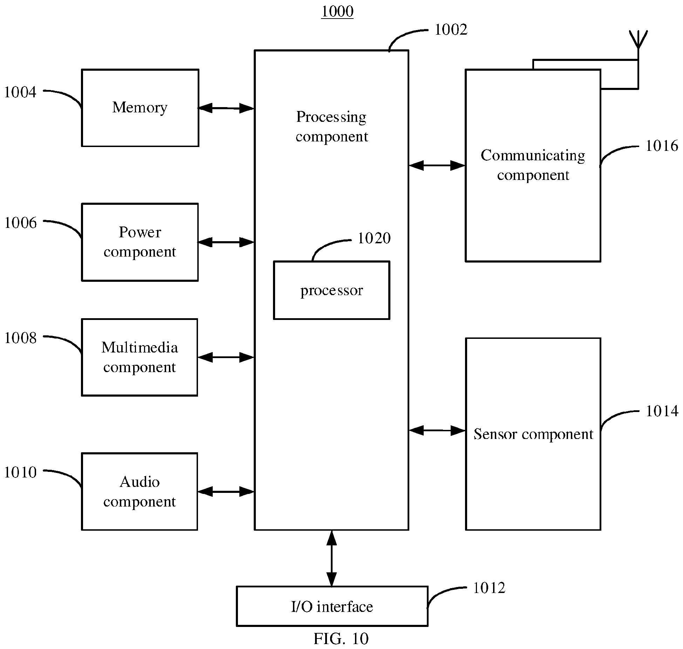

FIG. 10 is a schematic diagram illustrating a device 1000 for sending assistance information according to an embodiment of the disclosure. For example, the device 1000 may be a mobile phone, a computer, a digital broadcasting terminal, a message transceiver device, a game console, a tablet device, a medical device, a fitness device and a personal digital assistant, etc.

As illustrated in FIG. 10, the device 1000 may include one or more of components: a processing component 1002, a memory 1004, a power component 1006, a multimedia component 1008, an audio component 1010, an input/output (I/O) interface 1012, a sensor component 1014, and a communication component 1016.

The processing component 1002 typically controls overall operations of the device 1000, such as the operations associated with display, telephone calls, data communications, camera operations, and recording operations. The processing component 1002 may include one or more processors 1020 to execute instructions to implement all or part of the steps in the above described method for sending assistance information. Moreover, the processing component 1002 may include one or more modules which facilitate the interaction between the processing component 1002 and other components. For example, the processing component 1002 may include a multimedia module to facilitate the interaction between the multimedia component 1008 and the processing component 1002.

The memory 1004 is configured to store various types of data to support the operation of the device 1000. Examples of such data include instructions for any applications or methods operated on the device 1000, contact data, phonebook data, messages, pictures, videos, etc. The memory 1004 may be implemented using any type of volatile or non-volatile memory devices, or their combination, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 1006 provides power to various components of the device 1000. The power component 1006 may include a power management system, one or more power sources, and any other components associated with the generation, management, and distribution of power in the device 1000.

The multimedia component 1008 includes a screen providing an output interface between the device 1000 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of time and a pressure associated with the touch or swipe action. In some embodiments, the multimedia component 1008 includes a front-facing camera and/or a rear-facing camera. When the device 1000 is in an operating mode, such as a shooting mode or a video mode, the front-facing camera and/or the rear-facing camera can receive external multimedia data. Each front-facing camera and rear-facing camera may be a fixed optical lens system or has a focal length and optical zoom capability.

The audio component 1010 is configured to output and/or input audio signals. For example, the audio component 1010 includes a microphone (MIC) configured to receive an external audio signal when the device 1000 is in an operation mode, such as a call mode, a recording mode, and a voice recognition mode. The received audio signal may be further stored in the memory 1004 or transmitted via the communication component 1016. In some embodiments, the audio component 1010 further includes a speaker to output audio signals.

The I/O interface 1012 provides an interface between the processing component 1002 and peripheral interface modules, such as a keyboard, a click wheel, buttons, and the like. The buttons may include, but are not limited to, a home button, a volume button, a starting button, and a locking button.

The sensor component 1014 includes one or more sensors to provide status assessments of various aspects of the device 1000. For instance, the sensor component 1014 may detect an open/closed status of the device 1000, relative positioning of components, e.g., the display and the keypad, of the device 1000, a change in position of the device 1000 or a component of the device 1000, a presence or absence of user contact with the device 1000, an orientation or an acceleration/deceleration of the device 1000, and a change in temperature of the device 1000. The sensor component 1014 may include a proximity sensor configured to detect the presence of nearby objects without any physical contact. The sensor component 1014 may also include a light sensor, such as a Complementary Metal Oxide Semiconductor (CMOS) or Charge-Coupled Device (CCD) image sensor, for use in imaging applications. In some embodiments, the sensor component 1014 may also include an accelerometer sensor, a gyroscope sensor, a magnetic sensor, a pressure sensor, or a temperature sensor.

The communication component 1016 is configured to facilitate communication, wired or wirelessly, between the device 1000 and other devices. The device 1000 can access a wireless network based on a communication standard, such as Wi-Fi, 2G or 3G, 4G LTE, 5G NR or their combination. In an exemplary embodiment, the communication component 1016 receives a broadcast signal from an external broadcast management system or broadcast associated information via a broadcast channel. In an exemplary embodiment, the communication component 1016 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In the exemplary embodiment, the device 1000 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described method for sending assistance information.

In an exemplary embodiment, there is also provided a non-transitory computer readable storage medium including instructions, such as the memory 1004. The above instructions may be executed by the processor 1020 in the device 1000, for performing the method for sending assistance information. For example, the non-transitory computer-readable storage medium may be a ROM, a Random Access Memory (RAM), a CD-ROM, a magnetic tape, a floppy disc, and an optical data storage device.

Other embodiments of the disclosure will be apparent to those skilled in the art from consideration of the specification and practice of the disclosure disclosed here. The disclosure is intended to cover any variations, usages, or adaptations of the embodiments of the disclosure, which follow the general principles of the disclosure and include common knowledge or conventional technical means in the art. The specification and embodiments are considered as exemplary only, with a true scope and spirit of the disclosure being indicated by claims.

It will be appreciated that the disclosure is not limited to the exact construction that has been described above and illustrated in the accompanying drawings, and that various modifications and changes can be made without departing from the scope of the disclosure. It is intended that the scope of the disclosure only be limited by the appended claims.

It should be noted that the relational terms herein, such as "first" and "second", are used only for differentiating one entity or operation, from another entity or operation, which, however do not necessarily require or imply that there should be any real relationship or sequence. Moreover, the terms "comprise", "include" or any other variations of the disclosure are meant to cover non-exclusive including, so that the process, method, article or device comprising a series of elements do not only comprise those elements, but also comprise other elements that are not explicitly listed or also comprise the inherent elements of the process, method, article or device. In the case that there are no more restrictions, an element qualified by the statement "comprises a... " does not exclude the presence of additional identical elements in the process, method, article or device that comprises the said element.

The above detailed description of the methods and devices in the embodiments of the disclosure is provided herein, and specific examples are used herein to illustrate the principles and implementations of the disclosure, and the above descriptions of the embodiments are only used to assist in the understanding of the methods of the disclosure and the core ideas concept of the disclosure. Meanwhile, for those skilled in the art, based on the ideas of the disclosure, there may be changes in the specific implementations and the usage scope. In summary, the contents of the specification should not be construed as a limitation on the disclosure.

## Claims

1. A method for sending assistance information, applicable to a terminal, comprising:
determining a requirement of using discontinuous reception (DRX);
determining DRX assistance information corresponding to the requirement, wherein the DRX assistance information at least indicates preferred DRX configuration information of the terminal; and
sending the DRX assistance information to a network device.

2. The method of claim 1, wherein the requirement comprises at least one of :
energy saving, in-device coexistence (IDC) interference, or limited capability.

3. The method of claim 2, wherein the preferred DRX configuration information of the terminal comprises at least one of :
a DRX cycle;
a DRX activation duration; or
DRX start position information.

4. The method of claim 2, wherein the DRX assistance information indicates other information, comprising at least one of :
the requirement;
a sub-carrier space (SCS) corresponding to the preferred DRX configuration information of the terminal; or
frequency domain information corresponding to the preferred DRX configuration information of the terminal.

5. The method of claim 4, wherein in response to determining that the network device allows the terminal to report the other information, the DRX assistance information further indicates the other information.

6. The method of claim 4, wherein the frequency domain information comprises at least one of :
a cell type;
a cell group type;
a cell identifier;
a bandwidth part (BWP) identifier;
a frequency point identifier;
a bandwidth;
a start position; or
an end position.

7. The method of claim 4, wherein sending the DRX assistance information to the network device, comprises:
in response to a target condition being satisfied, sending the DRX assistance information to the network device, wherein the target condition comprises at least one of :
a condition that the requirement is a target requirement; or
a condition that a prohibit timer for sending the DRX assistance information has not expired or is not running.

8. The method of any one of claims 1-7, wherein in response to the requirement comprising a plurality of requirements, the DRX assistance information comprises DRX assistance information corresponding to each requirement.

9. A method for receiving assistance information, applicable to a network device, comprising:
receiving DRX assistance information determined by a terminal according to a requirement of using discontinuous reception (DRX).

10. The method of claim 9, wherein the requirement comprises at least one of :
energy saving, in-device coexistence (IDC) interference, or limited capability.

11. The method of claim 10, further comprising:
determining preferred DRX configuration information of the terminal according to the DRX assistance information;
wherein the preferred DRX configuration information of the terminal comprises at least one of :
a DRX cycle;
a DRX activation duration; or
DRX start position information.

12. The method of claim 10, further comprising:
determining other information according to the DRX assistance information, wherein the other information comprises at least one of :
the requirement;
a sub-carrier space (SCS) corresponding to the preferred DRX configuration information of the terminal; or
frequency domain information corresponding to the preferred DRX configuration information of the terminal.

13. The method of claim 12, further comprising:
in response to determining that the requirement comprises the energy saving and/or the limited capability, stopping a downlink transmission in an off duration corresponding to the preferred DRX configuration information of the terminal, and/or configuring the terminal to stop an uplink transmission in an off duration corresponding to the preferred DRX configuration information of the terminal.

14. The method of claim 12, further comprising:
in response to determining that the requirement comprises the IDC interference, and that a 3rd Generation Partnership Project (3GPP) frequency band is an interfered frequency band, increasing a power of a downlink transmission in an off duration corresponding to the preferred DRX configuration information of the terminal;
and/or,
in response to determining that the requirement comprises the IDC interference, and that a 3GPP frequency band is an interfering frequency band, configuring the terminal to reduce a power of an uplink transmission in an off duration corresponding to the preferred DRX configuration information of the terminal.

15. The method of claim 12, further comprising:
sending indication information to the terminal, wherein the indication information indicates whether the terminal is allowed to report the other information.

16. The method of claim 12, wherein the frequency domain information comprises at least one of :
a cell type;
a cell group type;
a cell identifier;
a bandwidth part (BWP) identifier;
a frequency point identifier;
a bandwidth;
a start position; or
an end position.

17. The method of claim 12, further comprising:
sending indication information to the terminal, wherein the indication information indicates the terminal to send the DRX assistance information to the network device in response to a target condition being satisfied;
wherein the target condition comprises at least one of :
a condition that the requirement is a target requirement; or
a condition that a prohibit timer for sending the DRX assistance information has not expired or is not running.

18. The method of any one of claims 9-17, wherein in response to the requirement comprising a plurality of requirements, the DRX assistance information comprises DRX assistance information corresponding to each requirement.

19. An apparatus for sending assistance information, arranged in a terminal, comprising:
a processing module, configured to determine a requirement of using discontinuous reception (DRX), and determine DRX assistance information corresponding to the requirement, wherein the DRX assistance information at least indicates preferred DRX configuration information of the terminal; and
a communication module, configured to send the DRX assistance information to a network device.

20. An apparatus for sending assistance information, arranged in a network device, comprising:
a communication module, configured to receive discontinuous reception (DRX) assistance information determined by a terminal according to a requirement of using DRX.

21. A communication device, comprising:
a processor; and
a memory for storing a computer program;
wherein when the computer program is executed by the processor, the method for sending assistance information of any one of claims 1-8 is implemented.

22. A communication device, comprising:
a processor; and
a memory for storing a computer program;
wherein when the computer program is executed by the processor, the method for receiving assistance information of any one of claims 9-18 is implemented.

23. A computer readable storage medium for storing computer programs, wherein when the computer program is executed by a processor, the steps in the method for sending assistance information of any one of claims 1-8 are implemented.

24. A computer readable storage medium for storing a computer program, wherein when the computer program is executed by a processor, the steps in the method for receiving assistance information of any one of claims 9-18 are implemented.
